# EUROPEAN PATENT APPLICATION

(11) **EP 0 636 774 A1**
(43) Date of publication of application: **01.02.1995**
(21) Application number: 94108609.2
(22) Date of filing: 06.06.1994
(51) Int. Cl.: F02B 27/02

(54) **Internal combustion engine feed device**

(30) Priority: 26.07.1993 IT MI931661
(71) Applicant: FIAT AUTO S.p.A., I-10135 Torino (IT)
(72) Inventor: Malter, Ugo, I-20020 Arese (Milano) (IT)
(74) Representative: Di Francesco, Gianni

(57) **Abstract**

An internal combustion engine feed device consisting of a cylindrical casing having an entry portion, and a feed portion for each engine cylinder. The casing contains a rotatable element having an internal capacity. The capacity is arranged to communicate with the entry portion and with the feed portions. Each feed portion consists of two different-length exit ducts extending separately from the casing to join together into a single feed duct in the final part of the feed portion. Based on two final positions of the rotatable element, only one of the two different-length exit ducts is able to communicate with the capacity, whereas the other exit duct is closed in an air-tight manner.

## Description

This invention relates to an internal combustion engine feed device of the type indicated in the introduction to claim 1. Devices with variable-length feed ducts for internal combustion engines are known which have the drawback of being applicable only to engines with in-line cylinders, but cannot be used for other engine types without creating evident space and cost problems. In particular, these known devices have the drawback of not being applicable to engines with opposing cylinders, such as 4, 6 or 8 cylinder Boxer engines or multi-cylinder 60° or 90° V engines, without occupying considerable space within the engine compartment and leading to increased weight and costs.

The object of the present invention is to provide an internal combustion engine feed device which is applicable to all types of engine, including opposing cylinder engines, without said drawbacks.

This object is attained according to the present invention by an internal combustion engine feed device consisting of a cylindrical casing having an entry portion and, for connecting each engine cylinder to the casing interior, a respective feed portion, there being contained within the casing a rotatable element having an internal capacity, said capacity being connected to the entry portion via an entry aperture and to the feed portions via a respective exit aperture in the rotatable element, characterised in that each feed portion consists of two different-length exit ducts extending separately from the casing to join together into a single feed duct in the final part of the feed portion, in which said two exit ducts and the corresponding two exit apertures of the rotatable element are arranged such that, based on two final positions of the rotatable element, only one of said two different-length exit ducts is able to communicate with the capacity, whereas the other exit duct is closed in an air-tight manner.

This feed device according to the present invention has the advantage that by using two different-length exit ducts for each engine cylinder, the feed portion is variable in length in accordance with the final position of the rotatable element. This method of selecting one of the two exit ducts as a result of positioning the exit apertures by rotating the rotatable element means that the feed portion can be positioned directly in the direction of a determined cylinder, even in the case of an engine with opposing cylinders.

Hence applying the device of the present invention enables a plurality of cylinders to be fed simultaneously, even in the case of opposing cylinders, via variable-length feed portions with minimum space requirement.

The technical characteristics and further advantages of the present invention will be more apparent from the description given hereinafter by way of non-limiting example with reference to the accompanying drawings, in which:
Figure 1 is a cross-section through the feed device with the greater-length exit duct communicating with the capacity;
Figure 2 is a cross-section through the feed device of Figure 1 with the lesser-length exit duct communicating with the capacity;
Figure 3 is a longitudinal section through the device of Figure 2 in the horizontal direction;
Figure 4 is a longitudinal section through the device of Figure 2 in the vertical direction;
Figure 5 is a cross-section through a second embodiment of the feed device; and
Figure 6 is a cross-section through a further embodiment of the feed device.

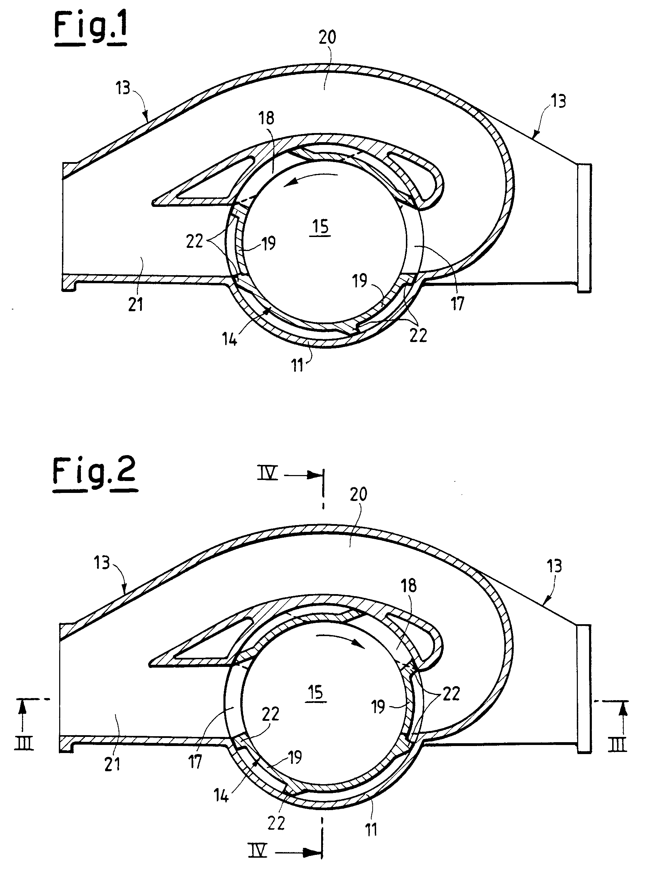

Figures 1 to 4 show a feed device according to the present invention.

This device consists of a cylindrical casing 11 having an entry portion 12. For connecting each of the engine cylinders, not shown, to the interior of the casing 11, this latter also comprises a feed portion 13. The casing 11 contains a rotatable element 14, in this case of cylindrical shape. The rotatable element 14 comprises an internal capacity 15 which is connected to the entry portion via an entry aperture 16 and to the feed portions via a respective exit aperture 17. The rotatable element 14 also comprises for each engine cylinder a further exit aperture 18 which is closed in an air-tight manner.

According to the invention, each feed portion 13 consists of two exit ducts 20, 21 of different length. The exit ducts 20, 21 extend separately from the casing 11 to join together into a single feed duct in the final part of the feed portion 13, which can be connected for example to a further duct leading to an engine cylinder, not shown.

As can be seen from Figures 1 and 2, the two exit ducts 20, 21 and the corresponding two exit apertures 17, 18 of the rotatable element 14 are arranged and shaped such that, on the basis of two final positions of the rotatable element 14, only one of the two different-length exit ducts 20, 21 is able to communicate with the capacity 15, whereas the other exit duct 20, 21 is closed. In this case the rotatable element 14 has an outer diameter less than the inner diameter of the casing 11. To close in an air-tight manner one of the exit ducts 20, 21 on the basis of the final position of the rotatable element 14, this latter is provided with sectors 19 having a respective ring 22 which projects as far as the inner surface of the casing 11 and has the same cross-section as the exit apertures 17, 18. The other exit duct 21 or 20 is able to communicate with the capacity 15 on the basis of the final position of the rotatable element 14 because of the exit apertures 17, 18, which comprise at their edges a further ring equally projecting as far as the inner surface of the casing 11.

Figure 1 shows the situation with the first final position of the rotatable element 14, in which the exit duct 20 communicates with the capacity 15, whereas the other exit duct 21 is maintained closed in an air-tight manner by a sector 19 of the rotatable element 14.

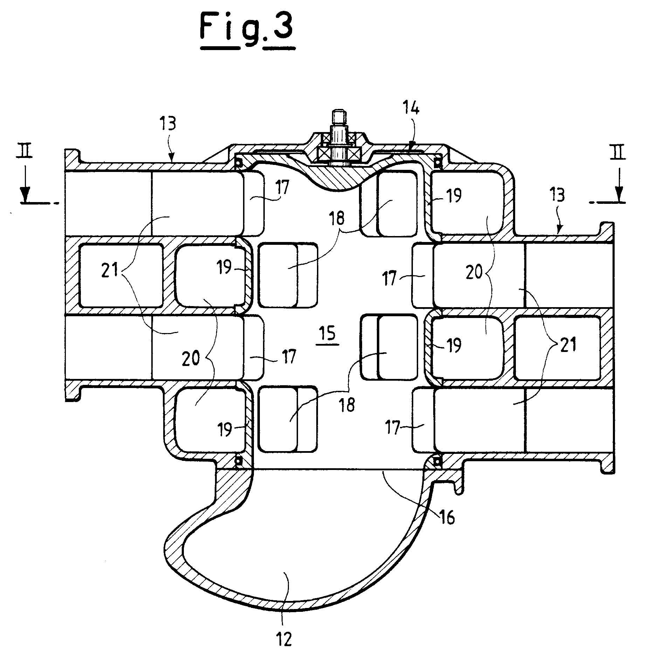

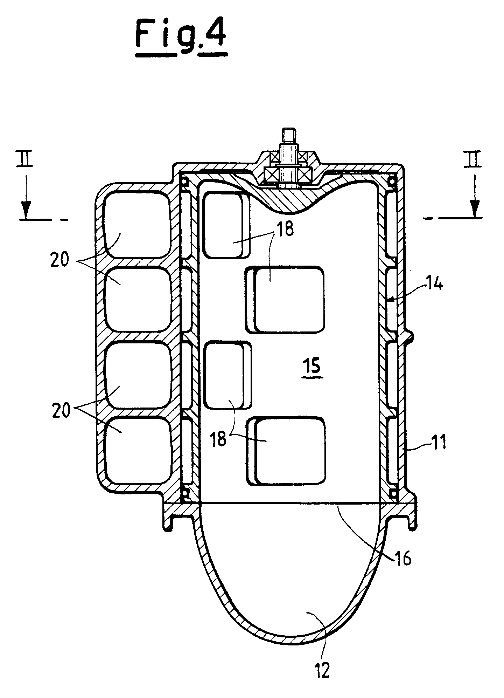

Figure 2 shows the second final position of the rotatable element 14, in which the exit duct 21 communicates with the capacity 15, whereas the other exit duct 20 is maintained closed in an air-tight manner by another sector 19 of the rotatable element 14. In this case the exit ducts 20, 21 are preferably of rectangular cross-section as shown in Figures 3 and 4. Hence the exit apertures 17, 18 of the rotatable element 14, which preferably have the same cross-section as the exit ducts 20 and 21, are also of rectangular cross-section.

It can also be seen from Figure 3 that the device of the present invention is advantageously also applicable to engines with opposing cylinders. The present case relates to an engine with four opposing cylinders, not shown, in which the two cylinders on each side are able to communicate with the capacity 15 via two exit ducts 21 and the two exit apertures 17, while the other two exit ducts 20 on each side are maintained closed in an air-tight manner by sectors 19 of the rotatable element 14.

Hence the device comprises a plurality of exit portions 13, in this case four, which are positioned to correspond to the arrangement of the cylinders of an engine with opposing cylinders. In addition Figures 1 and 2 show by dashed lines the respective apertures of the rotatable element 14 in the plane of the rear cylinder, which is hence a cylinder opposing the actual engine cylinder relative to Figure 1 or 2.

The rotatable element 14 can be rotated by an external control such as a pneumatically operated actuator, not shown. This control rotates the rotatable element 14 into its respective final positions, in this case two, to connect the capacity 15 to one of the different-length exit ducts 20, 21 according to the engine requirements. The rotatable element 14 can rotate within the casing 11 with a clearance of 0.2-0.4 mm and can have a wall thickness of 8-10 mm.

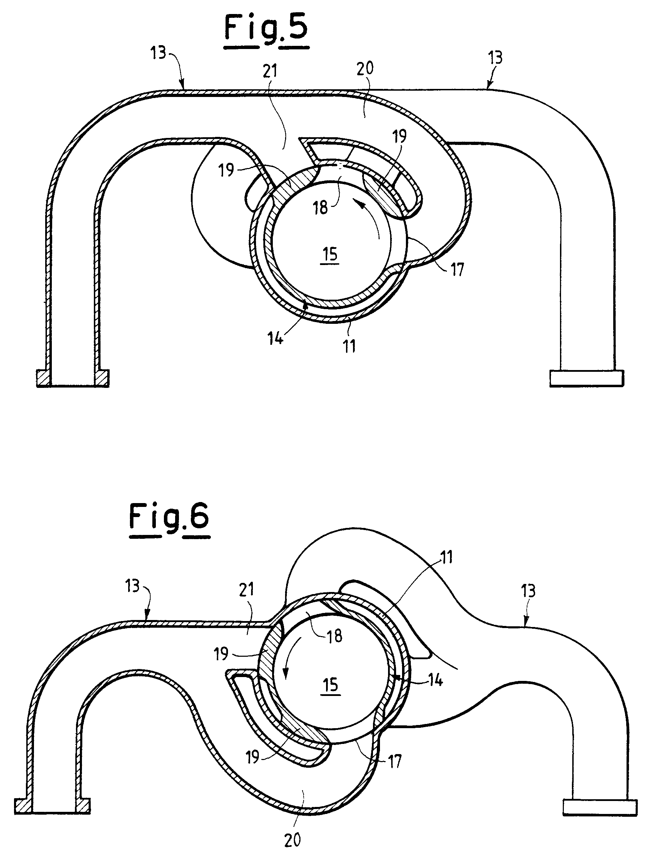

The device can be constructed of aluminium alloy, with the rotatable element 14 of aluminium alloy or plastics. Figures 5 and 6 show further embodiments of the feed device of the present invention.

The device of Figure 5 comprises a casing 11 again provided with two exit ducts 20, 21 which extend separately in a radial direction from the casing 11 but not in the same plane as in Figures 1 and 2. In addition the rotatable element 14 comprises sectors 19 for closing one of the two exit ducts 20, 21, in this case the duct 21, which project totally as far as the inner wall of the casing 11.

The third embodiment of the device, shown in Figure 6, differs from the preceding in that the exit duct 20, being the longer duct, extends alternately from below the casing 11 for one engine cylinder and from above the casing 11 for the opposing cylinder. Figures 5 and 6 also show with dashed lines the respective apertures of the rotatable element 14 in the plane of the rear cylinder of an engine with opposing cylinders.

It is also possible to use a device of the present invention with more than two different-length exit ducts for each feed portion 13 and hence more than two corresponding exit apertures and final positions of the rotatable element 14.

The feed device of the present invention can be used both on a single throttle injection engine and on a single feed engine with throttles downstream of the capacity.

## Claims

1. An internal combustion engine feed device consisting of a cylindrical casing (11) having an entry portion (12) and, for connecting each engine cylinder to the interior of the casing (11), a respective feed portion (13), there being contained within the casing (11) a rotatable element (14) having an internal capacity (15), said capacity being connected to the entry portion (12) via an entry aperture (16) and to the feed portions (13) via a respective exit aperture (17) in the rotatable element (14), characterised in that each feed portion (13) consists of two different-length exit ducts (20, 21) extending separately from the casing (11) to join together into a single feed duct in the final part of the feed portion (13), in which said two exit ducts (20, 21) and the corresponding two exit apertures (17, 18) of the rotatable element (14) are arranged such that, based on two final positions of the rotatable element (14), only one of said two different-length exit ducts (20, 21) is able to communicate with the capacity (15), whereas the other exit duct (20, 21) is closed in an air-tight manner.

2. A feed device as claimed in claim 1, characterised in that the different-length exit ducts (20, 21) of each feed portion (13), the corresponding exit apertures (17, 18) and the final positions of the rotatable element (14) are more than two in number.

3. A feed device as claimed in claim 1 or 2, characterised in that the rotatable element (14) and the capacity (15) are of cylindrical shape.

4. A feed device as claimed in claims 1 to 3, characterised in that the exit ducts (20, 21) are respectively of rectangular cross-section.

5. A feed device as claimed in one of claims 1 to 4, characterised in that the exit apertures (17, 18) of the rotatable element (14) are identical to the cross-section of the exit ducts (20, 21).

6. A feed device as claimed in one of claims 1 to 5, characterised in that the rotatable element (14) is operated by an actuator with external pneumatic control.

7. A feed device as claimed in one of claims 1 to 6, characterised in that the engine is an engine with opposing cylinders.

8. A feed device as claimed in claim 7, characterised in that the device comprises a plurality of exit portions (13) positioned to correspond to the arrangement of the cylinders of an engine with opposing cylinders.

9. A feed device as claimed in one of claims 1 to 8, characterised in that the device is constructed of aluminium alloy, with the rotatable element (14) of aluminium alloy or plastics.

10. A feed device substantially as heretofore described and as illustrated on the accompanying drawings.
